# EUROPEAN PATENT SPECIFICATION

(11) **EP 3 637 226 B1**
(45) Date of publication and mention of the grant of the patent: **28.06.2023**
(21) Application number: 18200036.4
(22) Date of filing: 12.10.2018
(51) Int. Cl.: G06F 3/01, G06F 3/0481, G06F 3/04815, G02B 27/01, G02B 27/00

(54) **POSITIONING OF USER INTERFACE OBJECTS WITHIN A 3D SCENE**
POSITIONIERUNG VON OBJEKTEN EINER BENUTZERSCHNITTSTELLE INNERHALB EINER 3D-SZENE
POSITIONNEMENT D'OBJETS D'INTERFACE UTILISATEUR À L'INTÉRIEUR D'UNE SCÈNE 3D

(43) Date of publication of application: 15.04.2020
(73) Proprietor: ATOS France, 95870 Bezons (FR)
(72) Inventor: DE VRIES, Wouter, 1051 VR Amsterdam (NL); OLDENHAVE, Danny, 6931AP Westervoort (NL); EDERVEEN, Wim, 3845 DL Harderwijk (NL); KUIPER, Erik, 1013 SZ Amsterdamm (NL)
(74) Representative: Novagraaf Technologies

(56) References cited:
- WO-A1-2018/118661
- US-A1- 2018 259 486
- US-A1- 2018 286 126

## Description

### FIELD OF THE INVENTION

The present invention relates generally to the display of an object, especially a holographic object, within a scene. A virtual object is to be displayed and interact with the other objects of the scene.

### BACKGROUND OF THE INVENTION

Some applications may need the display of a "companion" object to a given object within a scene. This companion object may for instance be a user interface enabling a user to manipulate or make actions with regard to this given object.

The scene may be a real scene made of real objects, onto which some holographic projector(s) may create some holographic user interface objects "floating" close to targets objects.

The scene may also be a real scene made of real objects, but visualized by the users with virtual reality, augmented or mixed reality apparatus (e.g. glasses). The user interface objects may then be added to the scene as virtual objects.

Some proposals have been made by making use of augmented reality like US2018/0286126 A1 or WO2018/118661 A1 or US2018/259486 A1, but such arrangements are not always possible or desirable. In particular, US 2018/286126 A1 discloses a system (and corresponding method and computer program product) for displaying to a user a second object, which can be a holographic UI element, associated with a first object, which can be virtual content, floating holographic object, holographic object, holographic motorcycle of a 3D scene, comprising means for determining a location for displaying said second object; means for displaying said second object, said means comprising a holographic means configured to display said second object at said determined location; and means for determining the position of said user, wherein the location of said second object is determined by determining a position on a predetermined shape, according to a predetermined relative positioning information and said position of said user.

The scene may also be a virtual scene (or mixing virtual objects and real objects) and the user interface object may be added to the scene as virtual objects associated with other virtual objects.

In all these situations, a problem may occur regarding where to display the companion object with regard to the associated object.

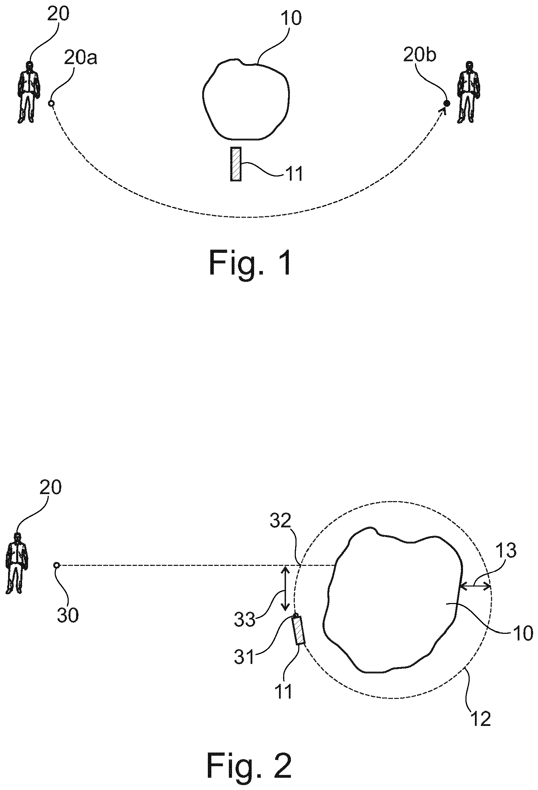

FIG. 1 shows a very schematic overview of a scene comprising one object 10, and a user interface object 11, associated to this first object 10. The user interface object 11 is displayed in the vicinity of the first object 10, so as to represent their associative relationship to a user 20 looking at the scene.

At position 20a, the user may clearly see the user interface 11. However, it may partially cover the object 10. When moving around until position 20b, the user interface object 11 may become not visible anymore as finally occluded by the first object 10.

Some solutions have been proposed to address this problem, but none are fully satisfactory.

The present invention aims in improvising the situation. In particular, it allows to avoid the user interface object to be occluded by its associated object. It allows also a natural feeling for interacting with the user interface, providing high-level ergonomics

### SUMMARY OF THE INVENTION

The object of the present invention is to alleviate at least partly the above mentioned drawbacks.

The invention is defined by the appended set of claims.

### BRIEF DESCRIPTION OF THE DRAWINGS

Fig. 1 show a general situation according to the prior art.
Fig. 2 shows a high-level schema representing mechanisms according to embodiments.
Fig. 3 shows a datagram according to embodiments .
Figs. 4a, 4b, 4c show illustrative examples for the determination of the position of the companion object.
Fig. 5 illustrates an embodiment wherein several companion objects are displayed in association with a single object.
Fig. 6 illustrates an embodiment making use of a holographic projector.
Fig. 7 illustrates an embodiment making use of an augmented reality device.

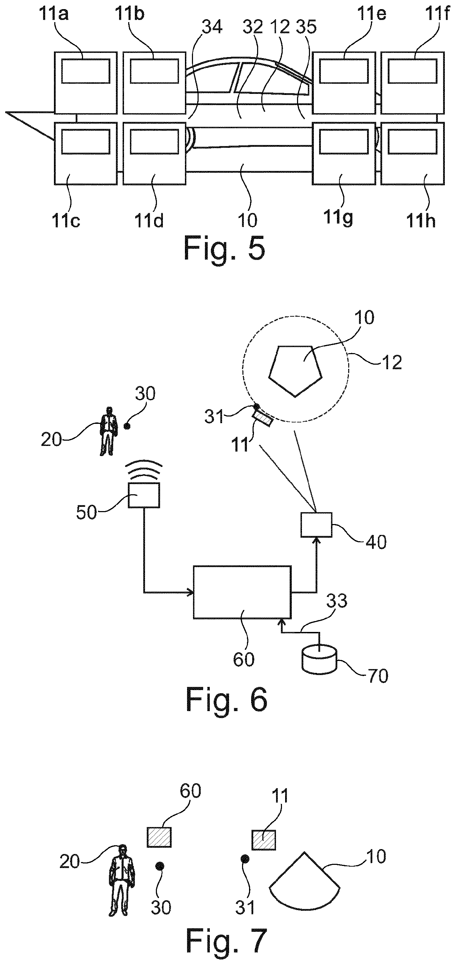

Figure 6 shows an embodiment according to the invention. The other embodiments do not describe the full and complete combination of features of the invention, but are useful in understanding the invention.

### DETAILED DESCRIPTION OF THE INVENTION

The invention may apply to various situations and applications wherein a companion object is to be displayed in association with a first "target" object. An example of "companion" object is a "user interface" object and in the following the wording "user interface" or UI will be used in place of "companion object", but the examples should be understood as encompassing other types of companion objects.

The "target" object in the invention is a real object. In the other examples, when the target object is a virtual object, it will be observed by the user through a virtual reality (VR) device, like VR glasses for instance.

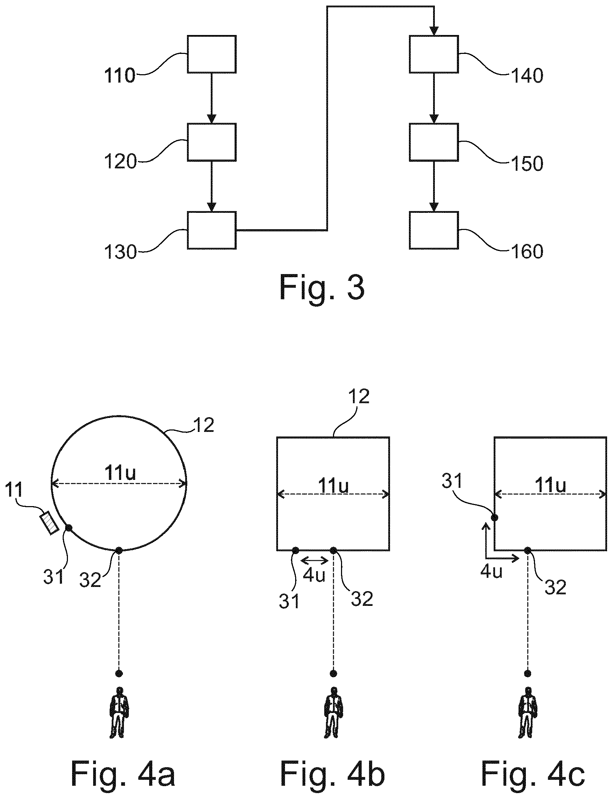

The examples comprise the determination of a location for displaying the user interface object. Aspects of examples will be described according to the schematic organigram, or chart, of FIG. 3 and to the example scene depicted on FIG. 2,

According to an aspect of the examples, this determination comprises a step 110 of determination of the position 30 of the user 20. In particular, this position may be a relative position with regard to the target object 10.

Several embodiments are possible to determine the position 30 of the user, which may depend on applications and technology choices. For instance, some virtual reality devices, like for instance the "Hololens" apparatus are inherently aware of their positioning in the space. In case of full virtual reality scenes, since the scenes are constructed from the device, the latter is naturally aware of the positioning of each constructed objects and therefore of its own relative positioning to each objects.

In other applications, infrared cameras and receivers can be used for the determination of the position of the user within the scene. It is for instance the case with the "HTC Vive" or "Oculus Rift" systems. In still other embodiments, regular video camera can be used for the determination of the position of the user.

In a step 120, a predetermined shape 12 is retrieved for the target object 10. This predetermined shape may be stored, at configuration of the system, within a database accessible to the apparatus in charge of displaying the user interface object 11.

This shape may be defined for a single object, or for a category of objects or for all objects. In particular, this shape may depend on the geometry of the object. At configuration, the scene designer may choose of each object or each category of objects a particular shape from a catalog of available shapes.

The predetermined shape 12 forms a sort of "rail" onto which the user interface objects 11 are positioned, and may move dynamically according to the position of the user. The term "rail" seems accordingly appropriate to name this shape and accordingly both terms can be used interchangeably.

This rail 12 embeds the target object 10 along a least one plane. Preferably, this plane is the horizontal plane (with regard to the horizon as seen by the user 20). By "embedding" it should be understood that the rail forms a "slice" of the object (which thickness depend on the size of the rail on the vertical dimension), and that all points of this slide are comprised inside the rail. This definition and understanding follows the usual definitions in topology, accessible to the skilled person, and as explained, e.g. in https://en.wikipedia.org/wiki/Embedding

In other words, the rail aims in (at least partially) encapsulating or surrounding the target object, forming a circle or a ring around it. The rail may share the same center as the center of the object.

The rail may be a line around the object (a circle, a square, or other shapes). But it may also have a thickness (along the vertical dimension) and forms a ring for instance. It may also possible to have a spherical or cubic rail so as to embed the object in all dimensions.

Preferably, the rail is not shown to the user, and is only an internal data structure allowing to position the user interfaces in relation with the associated object.

According to some embodiments, it is possible to display the rails, especially by switching a command on the user interface. This may allow to investigate about the reasons of a not-planned behavior of the companion object. Then, the user or the person in charge of the design of the global arrangement can intervene and correct some positioning parameters as explained below.

The padding 13 between the target object 10 and the rail 12 may be determined automatically according to predetermined rule. For instance, a padding of 10% of the maximum size of the object can be preset. The scene designer may also intervene by setting himself this padding or modifying its automatically-set value.

Then, a position 31 is determined on this rail 12 according a predetermined relative positioning information, and the position 30 of the user.

The method comprises
- a step 130 consisting in calculating the intersection 32 between the rail 12 and the line joining the center of the target object10 and the position 30 of the user 20, and
- a step 140 consisting in retrieving a predetermined relative positioning information, associated with the couple target object / UI object.
- a step 150 consisting in determining the position 31 for the UI object to be displayed by applying this predetermined relative positioning information, to this intersection 32.

The predetermined relative positioning information can be automatically set or provisioned by the scene designer, or another party (designer of the object, etc.) so as to set how the user interface is displayed with regard to the target object. In particular, it may allow coarse arrangements like "left", "right", or finer arrangements like "5% left", "2% right" (wherein the figures may refer to the maximal size of the object), or 1 meter left, 50 cm right, etc. The skilled person would appreciate various arrangements possible and various digital format for the predetermined relative positioning information to convey such arrangements.

In the example depicted on FIG. 2, the predetermined relative positioning information represents the gap 33 between the intersection 32 and the position 31 of the user interface object 11. One can assume that this predetermined relative positioning information can be "right" or more fine-grained indication for setting the UI object at the right (from user's perspective) of the target object 10.

It should be appreciated that the position 31 of the UI object does not depend on the orientation of the user. Accordingly, its location will remain the same as the user turns his head like any fixed object. It is considered that this behavior improves the user experience by providing a more stable scene, and allows more efficient interactions with the user interface (e.g. by gesture, movement capturing, etc.)

Once the position 31 for the UI object determined, a step 160 may consist in retrieving information representing a visual aspect of the UI object, so as to display it. This information may relate both to the appearance of the UI and to its substantial content, i.e. it may define the shape of the UI, its size, its colors, but also its contents in terms of widgets, menus, texts, etc. These aspects are considered accessible to the skilled person, who may determine various embodiments to represent a user interface object, or any other companion objects.

FIGS. 4a, 4b, 4c show three examples depicting how the position of the UI object can be derived from the predetermined relative positioning information and the position of the intersection.

One assumes that the maximal size of the object is 10 units. One further assumes that the padding for the rail is 10%, leading to a maximal size (i.e. diameter, width) for the rail of 11 units (11 u.), and that the predetermined relative positioning information 33 indicates a shift of 4 units to the left (or 40% if relative figures are used).

In FIG. 4a, the rail 12 is a circle (or a ring, of which only a projection on the horizontal plane is depicted). From the intersection 32, the position 31 for the user interface object 11 is shifted for 4 units to the left along the circle 12.

In FIG 4b, the rail 12 is a square (or a square ring, of which only a projection on the horizontal plane is depicted). One assumes that line joining the position of the user to the center of the object hits the ring at the intersection 32 which is in the middle of its width.

From the intersection 32, the position 31 for the user interface object is shifted for 4 units to the left along the square 12. In this example, as this shift is less than half the width of the square (5.5 units), the position 31 lies in the same face of the object.

In FIG 4c, the rail 12 is a square (or a square ring, of which only a projection on the horizontal plane is depicted), as in the previous example. However, one assumes in the example that line joining the position of the user to the center of the object hits the ring 12 at the intersection 32 which is shifted to the left from the middle of its width (from 2 units for example)

From the intersection 32, the position 31 for the user interface object is shifted for 4 units to the left along the square 12. This means that the shift is to be continued along the next side of the rail, if the remaining space in the current side is not enough.

As the position 32 is at 5.5-2=3.5 units from the left edge, the remaining space is not enough and the position 31 for the user interface is the next side, i.e. left side, at 4-3.5=0.5 units from the left edge.

FIG. 5 shows an example with several user interfaces objects 11a, 11b, 11c... 11h for a same object 10, depicted from a lateral point of view.

The depicted object is a car, but the skilled person would appreciate the example relates to any types of objects and any size of objects. As explained before, it can adapt to real or virtual objects.

A rail 12 is associated to this object, which is a ring in the case of this example. The ring is preferably not shown to the user, and is depicted on FIG. 5 only for the clarity of the explanation.

Respective predetermined relative positioning information can be associated to each user interface objects to be displayed, ruling how they should be positioned along the rail.

As explained before these predetermined relative positioning information can determine the actual position of the respective user interface relatively to the position of the user. According to an embodiment, the position of the user is taken into account by determining the intersection 32 of a line joining the position of the user to the center of the object.

A data structure associated to the object may define associations between user interface objects (or identifiers of them) and respective predetermined relative positioning information.

Several implementations are possible.

In the embodiment depicted on FIG. 5, two preset positions, a left panel position 34 and a right panel position 35, characterized by a spatial shift from the intersection 32, respectively to the left or to the right. The predetermined relative positioning information of each user interface may thus identify one of these preset positions 34, 35. Then the system may automatically arrange the user interfaces objects when several ones are assigned to a same preset position.

Furthermore, the predetermined relative positioning information may also define whether to align the user interface on top of the preset position or at bottom of them. Elsewhere, the determination to place a user interface on top or bottom to a preset position may be atomically done by the system (for instance, in absence of any indication within the predetermined relative positioning information, which would have been provided by the designer).

It can be appreciated that according to the shape 12, different arrangements can be possible, e.g. horizontally or in relation with a horizontal line like in the example of FIG. 5, but also in 2D if the rail has 2 dimensions.

The rail may even be generalized in 3D, so as to place the UI objects according to relative depth to each other (so as to represent hierarchies between the UI objects, for instance).

FIG. 6 depicts an embodiment wherein the scene is a real scene, comprising a real object 10 and a user 20. In addition, a holographic projector 40 is provided to display a holographic image representing the user interface object 11, and at least a sensor 50 is provided to determine in real-time the location of the user 20. This sensor may be a video camera, an infra-red camera, a radar, and any apparatus known in the art or still to come enabling to locate a user in a scene. A relative position of the user according to the position of the sensor is measured in real-time, and an location relative to the object 10 is then deduced by knowing the parameters of the scene like the position of the object and of the sensor.

A system 60 is further provided comprising
- means for determining the location 31 for displaying the UI object and
- means for controlling and provisioning the holographic projector 40, so as to display this UI object at the determined location 31,

The system determines the location of the UI object by determining first a position on the predetermined shape, or rail, 12 embedding the real object along a least one plane, according to the predetermined relative positioning information 33 and the position 30 of the user as captured by the sensor 50.

The predetermined shape and the predetermined relative positioning information 33 may be stored into a database 70 accessible to the system 60.

FIG.7 depicts another example, not covered by the invention, wherein a user 20 brings the system 60, which can be an augmented reality device, and sees a real object 10. The system 60 comprises the means for
- determining the location 31 for displaying the UI object as a virtual object and
- means for displaying this virtual UI object at the determined location 31,

This location is the location of a virtual object: it thus means that it is a location at which the user perceive the object to be.

This location is determined as in the previous example, except that the location of the user is known or measured directly by the system 60. The predetermined shape and the predetermined relative positioning information 33 may be stored into a database accessible to the system 60. This database may be onboard or remote to this system 60 and accessible by radio network (wifi, Bluetooth, etc.).

## Claims

1. Method, in a system comprising first means (60), second means (40) and third means (50), for displaying to a user (20) a second object (11) associated with a first object (10) of a 3D scene, wherein said first object (10) is a real object and wherein said second object is a holographic object displayed by an holographic projector, said method comprising:
determining, by said first means (60), of a location (31) for
displaying said second object,
displaying, by said second means (40), said second object, wherein said second means (40) comprises said holographic projector configured to display said second object at said determined location (31), and
determining (110), by said third means (50), a position (30) of said user (20), wherein said position of said user is said position of said user in the 3D scene,
wherein the location (31) for displaying said second object is determined by determining (120, 130, 140, 150) a position on a predetermined shape (12) embedding said first object along at least one plane, according to a predetermined relative positioning information (33) and said position (30) of said user;
said method further comprising
- a step (120) for retrieving, by said first means (60), said predetermined shape (12) associated with said first object (10);
- a step (130) for calculating, by said first means (60), an intersection (32) between said predetermined shape (12) and an imaginary line joining a center of said first object (10) and said position (30) of the user (20);
- a step (140) for retrieving, by said first means (60), said predetermined relative positioning information (33); and
- a step (150) for determining, by said first means (60), said position (31) of said second object by applying said predetermined relative positioning information, to said intersection (32).

2. Method according to any of the preceding claims, wherein said second object represents a user interface.

3. Method according to any of the previous claims, wherein said 3D scene is a real scene.

4. Computer program product comprising instructions for executing the method according to any for the previous claims, when said program is executed on a data-processing platform.

5. System for displaying to a user (20) a second object (11) associated with a first object (10) of a 3D scene, wherein said first object (10) is a real object and said second object (11) is a holographic object, said system comprising:
first means (60) for determining a location (31) for displaying said second object,
second means (40) for displaying said second object, wherein said second means (40) comprises a holographic projector configured to display said second object at said determined location (31), and
third means (50) for determining a position (30) of said user (20), wherein said position of said user is said position of said user in the 3D scene, wherein the location (31) for displaying said second object is determined by determining a position on a predetermined shape (12) embedding said first object along at least one plane, according to a predetermined relative positioning information (33) and said position (30) of said user, and
wherein said first means (60) is adapted for
- retrieving said predetermined shape (12) associated with said first object (10);
- calculating an intersection (32) between said predetermined shape (12) and an imaginary line joining a center of said first object (10) and said position (30) of the user (20);
- retrieving said predetermined relative positioning information (33); and
- determining said position (31) of said second object by applying said predetermined relative positioning information, to said intersection (32).

6. System according to claim 5, wherein said means (50) for determining the position (30) of the user (20) comprise at least one sensor for measuring a location of said user in real-time.

## Patentansprüche

1. Verfahren in einem System, umfassend erste Mittel (60), zweite Mittel (40) und dritte Mittel (50), zum Anzeigen, an einen Benutzer (20), eines zweiten Objekts (11), das einem ersten Objekt (10) einer 3D-Szene zugeordnet ist, wobei das erste Objekt (10) ein reales Objekt ist, und wobei das zweite Objekt ein holografisches Objekt ist, das durch einen holografischen Projektor angezeigt wird, das Verfahren umfassend:
Bestimmen, durch die ersten Mittel (60), einer Stelle (31) zum Anzeigen des zweiten Objekts,
Anzeigen, durch die zweiten Mittel (40), des zweiten Objekts, wobei die zweiten Mittel (40) den holografischen Projektor umfassen, der konfiguriert ist, um das zweite Objekt an der bestimmten Stelle (31) anzuzeigen, und
Bestimmen (110), durch die dritten Mittel (50), einer Position (30) des Benutzers (20), wobei die Position des Benutzers die Position des Benutzers in der 3D-Szene ist,
wobei die Stelle (31) zum Anzeigen des zweiten Objekts durch Bestimmen (120, 130, 140, 150) einer Position auf einer vorbestimmten Form (12) bestimmt wird, die das erste Objekt entlang mindestens einer Ebene einbettet, gemäß vorbestimmten relativen Positionierungsinformationen (33) und der Position (30) des Benutzers; das Verfahren ferner umfassend
- einen Schritt (120) zum Abrufen, durch die ersten Mittel (60), der vorbestimmten Form (12), die dem ersten Objekt (10) zugeordnet ist;
- einen Schritt (130) zum Berechnen, durch die ersten Mittel (60), einer Überschneidung (32) zwischen der vorbestimmten Form (12) und einer imaginären Linie, die eine Mitte des ersten Objekts (10) und die Position (30) des Benutzers (20) verbindet;
- einen Schritt (140) zum Abrufen, durch die ersten Mittel (60), der vorbestimmten relativen Positionierungsinformationen (33); und
- einen Schritt (150) zum Bestimmen, durch die ersten Mittel (60), der Position (31) des zweiten Objekts durch Anwenden der vorbestimmten relativen Positionierungsinformationen auf die Überschneidung (32).

2. Verfahren nach einem der vorstehenden Ansprüche, wobei das zweite Objekt eine Benutzerschnittstelle darstellt.

3. Verfahren nach einem der vorstehenden Ansprüche, wobei die 3D-Szene eine reale Szene ist.

4. Computerprogrammprodukt, umfassend Anweisungen zum Ausführen des Verfahrens nach einem der vorstehenden Ansprüche, wenn das Programm auf einer Datenverarbeitungsplattform ausgeführt wird.

5. System zum Anzeigen, an einen Benutzer (20), eines zweiten Objekts (11), das einem ersten Objekt (10) einer 3D-Szene zugeordnet ist, wobei das erste Objekt (10) ein reales Objekt ist und das zweite Objekt (11) ein holografisches Objekt ist, das System umfassend:
erste Mittel (60) zum Bestimmen einer Stelle (31) zum Anzeigen des zweiten Objekts,
zweite Mittel (40) zum Anzeigen des zweiten Objekts, wobei die zweiten Mittel (40) einen holografischen Projektor umfassen, der konfiguriert ist, um das zweite Objekt an der bestimmten Stelle (31) anzuzeigen, und
dritte Mittel (50) zum Bestimmen einer Position (30) des Benutzers (20), wobei die Position des Benutzers die Position des Benutzers in der 3D-Szene ist,
wobei die Stelle (31) zum Anzeigen des zweiten Objekts durch Bestimmen einer Position auf einer vorbestimmten Form (12) bestimmt wird, die das erste Objekt entlang mindestens einer Ebene einbettet, gemäß vorbestimmten relativen Positionierungsinformation (33) und der Position (30) des Benutzers, und
wobei die ersten Mittel (60) angepasst sind zum
- Abrufen der vorbestimmten Form (12), die dem ersten Objekt (10) zugeordnet ist;
- Berechnen einer Überschneidung (32) zwischen der vorbestimmten Form (12) und einer imaginären Linie, die eine Mitte des ersten Objekts (10) und die Position (30) des Benutzers (20) verbindet;
- Abrufen der vorbestimmten relativen Positionierungsinformationen (33); und
- Bestimmen der Position (31) des zweiten Objekts durch Anwenden der vorbestimmten relativen Positionierungsinformationen auf die Überschneidung (32).

6. System nach Anspruch 5, wobei die Mittel (50) zum Bestimmen der Position (30) des Benutzers (20) mindestens einen Sensor zum Messen einer Stelle des Benutzers in Realzeit umfassen.

## Revendications

1. Procédé, dans un système comprenant un premier moyen (60), un deuxième moyen (40) et un troisième moyen (50), pour afficher à un utilisateur (20) un second objet (11) associé à un premier objet (10) d'une scène 3D, dans lequel ledit premier objet (10) est un objet réel et dans lequel ledit second objet est un objet holographique affiché par un projecteur holographique, ledit procédé comprenant :
la détermination, par ledit premier moyen (60), d'une localisation (31) pour l'affichage dudit second objet,
l'affichage, par ledit deuxième moyen (40), dudit second objet, dans lequel ledit deuxième moyen (40) comprend ledit projecteur holographique configuré pour afficher ledit second objet au niveau de ladite localisation déterminée (31), et
la détermination (110), par ledit troisième moyen (50), d'une position (30) dudit utilisateur (20), dans lequel ladite position dudit utilisateur est ladite position dudit utilisateur dans la scène 3D,
dans lequel la localisation (31) pour l'affichage dudit second objet est déterminée en déterminant (120, 130, 140, 150) une position sur une forme prédéterminée (12) intégrant ledit premier objet le long d'au moins un plan, selon des informations de positionnement relatif prédéterminées (33) et ladite position (30) dudit utilisateur ; ledit procédé comprenant en outre
- une étape (120) pour la récupération, par ledit premier moyen (60), de ladite forme prédéterminée (12) associée audit premier objet (10) ;
- une étape (130) pour le calcul, par ledit premier moyen (60), d'une intersection (32) entre ladite forme prédéterminée (12) et une ligne imaginaire joignant un centre dudit premier objet (10) et ladite position (30) de l'utilisateur (20) ;
- une étape (140) pour la récupération, par ledit premier moyen (60), desdites informations de positionnement relatif prédéterminées (33) ; et
- une étape (150) pour la détermination, par ledit premier moyen (60), de ladite position (31) dudit second objet en appliquant lesdites informations de positionnement relatif prédéterminées, à ladite intersection (32).

2. Procédé selon l'une quelconque des revendications précédentes, dans lequel ledit second objet représente une interface utilisateur.

3. Procédé selon l'une quelconque des revendications précédentes, dans lequel ladite scène 3D est une scène réelle.

4. Produit programme informatique comprenant des instructions pour l'exécution du procédé selon l'une quelconque pour les revendications précédentes, lorsque ledit programme est exécuté sur une plate-forme de traitement de données.

5. Système permettant d'afficher à un utilisateur (20) un second objet (11) associé à un premier objet (10) d'une scène 3D, dans lequel ledit premier objet (10) est un objet réel et ledit second objet (11) est un objet holographique, ledit système comprenant :
un premier moyen (60) pour la détermination d'une localisation (31) pour afficher ledit second objet,
un deuxième moyen (40) pour l'affichage dudit second objet, dans lequel ledit deuxième moyen (40) comprend un projecteur holographique configuré pour afficher ledit second objet au niveau de ladite localisation déterminée (31), et
un troisième moyen (50) pour la détermination d'une position (30) dudit utilisateur (20), dans lequel ladite position dudit utilisateur est ladite position dudit utilisateur dans la scène 3D,
dans lequel la localisation (31) pour l'affichage dudit second objet est déterminée en déterminant une position sur une forme prédéterminée (12) intégrant ledit premier objet le long d'au moins un plan, selon des informations de positionnement relatif prédéterminées (33) et ladite position (30) dudit utilisateur, et
dans lequel ledit premier moyen (60) est conçu pour
- la récupération de ladite forme prédéterminée (12) associée audit premier objet (10) ;
- le calcul d'une intersection (32) entre ladite forme prédéterminée (12) et une ligne imaginaire joignant un centre dudit premier objet (10) et ladite position (30) de l'utilisateur (20) ;
- la récupération desdites informations de positionnement relatif prédéterminées (33) ; et
- la détermination de ladite position (31) dudit second objet en appliquant lesdites informations de positionnement relatif prédéterminées, à ladite intersection (32).

6. Système selon la revendication 5, dans lequel ledit moyen (50) pour la détermination de la position (30) de l'utilisateur (20) comprend au moins un capteur permettant de mesurer une localisation dudit utilisateur en temps réel.
